# EUROPÄISCHE PATENTSCHRIFT

(11) **EP 3 880 394 B1**
(45) Veröffentlichungstag und Bekanntmachung des Hinweises auf die Patenterteilung: **25.02.2026**
(21) Anmeldenummer: 19805565.9
(22) Anmeldetag: 11.11.2019
(51) Int. Cl.: B23K 26/03, B23K 26/342

(54) **VERFAHREN ZUM ERFASSEN EINES ARBEITSBEREICHS EINER GENERATIVEN FERTIGUNGSVORRICHTUNG SOWIE FERTIGUNGSVORRICHTUNG ZUM GENERATIVEN FERTIGEN VON BAUTEILEN AUS EINEM PULVERMATERIAL**
METHOD FOR DETECTING A WORKING AREA OF A GENERATIVE MANUFACTURING DEVICE AND MANUFACTURING DEVICE FOR GENERATIVELY MANUFACTURING COMPONENTS FROM A POWDER MATERIAL
PROCÉDÉ DE DÉTECTION D'UNE ZONE DE TRAVAIL D'UN DISPOSITIF DE FABRICATION GÉNÉRATIVE ET DISPOSITIF DE FABRICATION POUR LA FABRICATION GÉNÉRATIVE DE COMPOSANTS À PARTIR D'UN MATÉRIAU EN POUDRE

(30) Priorität: 12.11.2018 DE 102018219301
(43) Veröffentlichungstag der Anmeldung: 22.09.2021
(73) Patentinhaber: TRUMPF Laser- und Systemtechnik SE, 71254 Ditzingen (DE)
(72) Erfinder: SCHAAL, Frederik, 70734 Fellbach (DE); ALLENBERG-RABE, Matthias, 71640 Ludwigsburg (DE); BLICKLE, Valentin, 70190 Stuttgart (DE)
(74) Vertreter: Trumpf Patentabteilung
(86) Internationale Anmeldenummer: PCT/EP2019/080871
(87) Internationale Veröffentlichungsnummer: WO 2020/099323

(56) Entgegenhaltungen:
- EP-A1- 3 736 110
- WO-A1-2017/085470
- WO-A1-2020/094261
- WO-A1-2020/249460
- DE-B3- 102016 222 186

## Beschreibung

Die Erfindung betrifft ein Verfahren zum Erfassen eines Arbeitsbereichs einer generativen Fertigungsvorrichtung sowie eine Fertigungsvorrichtung zum generativen Fertigen von Bauteilen aus einem Pulvermaterial.

Bei einer solchen Fertigungsvorrichtung besteht grundsätzlich das Erfordernis, einen Arbeitsbereich, in welchem ein Bauteil aus einem Pulvermaterial generativ aufgebaut wird, zu überwachen. Dies betrifft insbesondere die Überwachung neu aufgetragener Pulverschichten, insbesondere auf eventuell mangelbeschichtete Bereiche oder Abrisskanten, die Analyse aufgeschmolzener Bereiche einer Pulverschicht, die Erfassung des entstehenden Bauteils, sowie weitere Anforderungen. Zunehmend ergibt sich außerdem, dass bestimmte Bauteile insbesondere wegen der sich insoweit ergebenden Kosten- und Geschwindigkeitsvorteile nicht im Ganzen generativ gefertigt werden, wobei vielmehr bestimmte Abschnitte eines Bauteils, bei denen sich die Vorteile dieses Verfahrens besonders verwirklichen, generativ auf eine klassisch hergestellte Grundform, einen sogenannten Vorformling, aufgebaut werden. Dies ermöglicht es, den Vorformling, beispielsweise einen Einspannschaft eines Werkzeugs, bei dem die generative Fertigung keine Vorteile brächte, schnell und insbesondere kostengünstig auf herkömmliche Weise zu fertigen, wobei anschließend auf dem Vorformling nur diejenige Bauteilgeometrie generativ aufgebaut wird, die in herkömmlicher Weise nicht oder nur mit deutlich höherem Aufwand zu fertigen wäre. Essentiell für eine gute Bauteilqualität solcher Mischbauteile, die auch als hybride Bauteile bezeichnet werden, ist eine genaue Kenntnis der Position des Vorformlings in dem Arbeitsbereich, sodass der generativ gefertigte Bauteilbereich mit hoher Genauigkeit, ohne Versatz, auf dem Vorformling aufgebaut werden kann. Insbesondere ist es nötig, die Lage des Vorformlings bis auf wenige 10 µm genau zu erfassen. Grundsätzlich können hierzu separate Messgeräte oder eigens zu diesem Zweck in die generative Fertigungsvorrichtung integrierte Messgeräte verwendet werden, wobei jedoch zwei Einflussgrößen auftreten, welche die Lagebestimmung beeinflussen: Zum einen die Genauigkeit des eingesetzten Messgeräts selbst, und zum anderen die Registriergenauigkeit zwischen dem Messgerät und einer Scannereinrichtung zum Verlagern eines optischen Arbeitsstrahls für die generative Fertigung. Unter dem Begriff "Registriergenauigkeit" wird dabei insbesondere die Genauigkeit einer Transformation von dem Koordinatensystem des Messgeräts in das Koordinatensystem der Scannereinrichtung verstanden. Insbesondere diese Registriergenauigkeit wird unmittelbar durch Instabilitäten und/oder Drifts in dem Messgerät sowie auch der Scannereinrichtung beeinflusst. Solche Fehlerbeiträge führen - insbesondere miteinander kumuliert - direkt zu einer Verminderung der Qualität und/oder Genauigkeit des entstehenden Bauteils, insbesondere zu einem Versatz zwischen dem Vorformling und dem darauf aufgebauten, generativ gefertigten Bauteilabschnitt. Dieses Problem tritt unabhängig von der Wahl des Messgeräts für die Lagebestimmung auf, seien es Triangulationssensoren, fotogrammetrische Sensoren, Streifenlichtprojektionssensoren, optische Kameras, Fotodioden, oder Zeilensensoren, welche den Arbeitsbereich unabhängig von der Scannereinrichtung erfassen.

Aus US 2018/0297117 A1 geht ein Verfahren und ein System hervor, bei denen optische Interferometrie im Kontext von Material-Modifikationsprozessen, insbesondere zur Prozessüberwachung und/oder Prozesssteuerung verwendet wird. Wird dabei eine Materialmodifikations-Strahlquelle zugleich auch als Abbildungs-Lichtquelle verwendet, wird die Materialmodifikations-Strahlquelle mit derjenigen Ausgangsleistung betrieben, die auch für den Material-Modifikationsprozess verwendet wird, sodass der mit dem Materialmodifikations-Strahl durchgeführte Prozess interferometrisch überwacht und/oder gesteuert werden kann.

DE 10 2016 222186 B3 offenbart ein Verfahren und eine Bearbeitungsmaschine, bei denen zwei Scannereinrichtungen über die jeweils ein Laserstrahl geführt wird, zueinander kalibriert werden, indem anhand einer vom Retroreflektor in die Scannereinrichtung zurück reflektierten und detektierten Laserstrahlung jeweils eine Abweichung einer Ist-Position von einer Soll-Position des Retroreflektors im Arbeitsbereich ermittelt und korrigiert wird.

WO 2017/085470 A1 zeigt das Einbringen von Markierungen in die Oberfläche einer Preform mit dem Energiestrahl einer Vorrichtung zur additiven Fertigung, eine Einbringung von weiteren Merkmalen in die Preform, wobei die Position der Merkmale in Abhängigkeit einer mittels Bilderfassung ermittelten Position der Markierungen erfolgt, und die Preform anschließend zur additiven Fertigung in der Vorrichtung zur additiven Fertigung verwendet werden.

Der Erfindung liegt die Aufgabe zugrunde, ein Verfahren zum Erfassen eines Arbeitsbereichs einer generativen Fertigungsvorrichtung sowie eine generative Fertigungsvorrichtung zum generativen Fertigen von Bauteilen aus einem Pulvermaterial zu schaffen, wobei die genannten Nachteile nicht auftreten.

Die Aufgabe wird gelöst, indem die vorliegende technische Lehre bereitgestellt wird, insbesondere die Lehre der unabhängigen Ansprüche, und der in den abhängigen Ansprüchen sowie der Beschreibung offenbarten Ausführungsformen.

Die Aufgabe wird insbesondere gelöst, indem ein Verfahren gemäß Anspruch 1 zum Erfassen eines Arbeitsbereichs einer generativen Fertigungsvorrichtung geschaffen wird, das folgende Schritte aufweist: Ein optischer Arbeitsstrahl der generativen Fertigungsvorrichtung wird in dem Arbeitsbereich verlagert. Signalwerte von entlang einer optischen Achse des optischen Arbeitsstrahls remittiertem Licht des optischen Arbeitsstrahls werden ortsabhängig erfasst. Dabei wird jedem Ort der Verlagerung des optischen Arbeitsstrahls in dem Arbeitsbereich ein Signalwert zugeordnet. Schließlich wird aus den ortsabhängig erfassten Signalwerten eine Abbildung des Arbeitsbereichs erhalten. Dadurch, dass remittiertes Licht von dem optischen Arbeitsstrahl ortsabhängig erfasst und daraus eine Abbildung des Arbeitsbereichs erhalten wird, ist es möglich, den optischen Arbeitsstrahl selbst zur Erfassung des Arbeitsbereichs heranzuziehen, sodass es keiner separaten oder eigens zu dem Zweck der Erfassung des Arbeitsbereichs vorgesehenen Messgeräte bedarf. Die Erfassung remittierten Lichts ermöglicht es, den Arbeitsbereich mit vergleichsweise kleiner optischer Ausgangsleistung des Arbeitsstrahls zu beobachten, da nicht auf ein Prozessleuchten und/oder thermische Emissionen zurückgegriffen werden muss, die in Leistungsbereichen des optischen Arbeitsstrahls auftreten, in denen eine Veränderung von in dem Arbeitsbereich angeordneten Materialien, sei es ein Vorformling oder Pulvermaterial, führen könnten. Somit kann die Erfassung des Arbeitsbereichs insbesondere beschädigungsfrei und/oder ohne Einfluss auf einen nachfolgenden Aufbauprozess zur Herstellung eines generativen Bauteils erfolgen. Dadurch, dass das remittierte Licht entlang der optischen Achse des optischen Arbeitsstrahls erfasst wird, erfolgt die ortsabhängige Erfassung der Signalwerte direkt im Koordinatensystem der Scannereinrichtung, sodass die ansonsten benötigte Registrierung zwischen einem Messgerät und der Scannereinrichtung vollkommen entfällt. Somit entfallen zugleich auch die zuvor genannten Fehlerquellen, und die Erfassung des Arbeitsbereichs ist sehr genau. Somit kann insbesondere die Lage eines Vorformlings sehr genau bestimmt werden. Wird der optische Arbeitsstrahl zur Erfassung des Arbeitsbereichs verwendet, entfallen weiterhin in sowohl einfacher als auch kostengünstiger Weise zusätzliche Sensorikkomponenten. Das Verfahren ist somit sehr einfach und kostengünstig durchführbar. Insbesondere können vorteilhaft ohnehin vorhandene Komponenten der generativen Fertigungsvorrichtung verwendet werden, sodass es lediglich einer Implementierung des Verfahrens in eine Steuerungssoftware der generativen Fertigungsvorrichtung bedarf, das schnell, einfach, kostengünstig und auch im Wege der Nachrüstung für bestehende generative Fertigungsvorrichtungen möglich ist.

Unter einem generativen Fertigen ist hier insbesondere ein additives Fertigen eines Bauteils zu verstehen. Insbesondere wird darunter ein schichtweises Aufbauen eines Bauteils aus Pulvermaterial verstanden. Insbesondere wird eine generative Fertigungsvorrichtung verwendet, die eingerichtet ist zum schichtweisen Aufbauen eines Bauteils aus einem Pulvermaterial, insbesondere zur Durchführung eines pulverbettbasierten Fertigungsverfahrens, vorzugsweise zur Durchführung eines generativen Fertigungsverfahren, das ausgewählt ist aus einer Gruppe, bestehend aus einem selektiven Lasersintern, einem Laser-Metall-Fusionieren (Laser Metal Fusion - LMF), einem direkten Metall-Laser-Schmelzen (Direct Metal Laser Melting - DMLM), einem Laser Net Shaping Manufacturing (LNSM), und einem Laser Engineered Net Shaping (LENS).

Unter einem optischen Arbeitsstrahl ist insbesondere gerichtete elektromagnetische Strahlung, kontinuierlich oder gepulst, zu verstehen, die im Hinblick auf ihre Wellenlänge oder einen Wellenlängenbereich geeignet ist zum generativen Fertigen eines Bauteils aus Pulvermaterial, insbesondere zum Sintern oder Schmelzen des Pulvermaterials. Insbesondere wird unter einem optischen Arbeitsstrahl ein Laserstrahl verstanden, der kontinuierlich oder gepulst erzeugt sein kann. Der optische Arbeitsstrahl weist bevorzugt eine Wellenlänge oder einen Wellenlängenbereich im sichtbaren elektromagnetischen Spektrum oder im infraroten elektromagnetischen Spektrum, oder im Überlappungsbereich zwischen dem infraroten Bereich und dem sichtbaren Bereich des elektromagnetischen Spektrums auf.

Der optische Arbeitsstrahl kann im Rahmen des Verfahrens in dem gesamten Arbeitsbereich verlagert werden, um den gesamten Arbeitsbereich zu erfassen. Es ist aber ebenso möglich, dass der optische Arbeitsstrahl im Rahmen des Verfahrens nur in einem Erfassungsabschnitt des Arbeitsbereichs, mithin einem Teilabschnitt des Arbeitsbereichs, der erfasst werden soll, verlagert wird, um den Erfassungsabschnitt zu erfassen. Es ist auch möglich, eine Mehrzahl voneinander getrennter Erfassungsabschnitte in dem Arbeitsbereich separat mit dem optischen Arbeitsstrahl zu erfassen.

Das remittierte Licht des optischen Arbeitsstrahls wird insbesondere entlang einer optischen Achse des optischen Arbeitsstrahls erfasst, indem eine Detektionseinrichtung, die eingerichtet ist zur Erfassung des remittierten Lichts, auf der optischen Achse angeordnet ist.

Vorzugsweise weist hierzu eine Strahleinrichtung, die eingerichtet ist zum Erzeugen des optischen Arbeitsstrahls, einen Umlenkspiegel auf, über den der optische Arbeitsstrahl umgelenkt wird, wobei die Reflektivität des Umlenkspiegels kleiner ist als 100 %, sodass ein Anteil des entlang der optischen Achse remittierten Lichts durch den Umlenkspiegel hindurchtritt und auf die hinter dem Umlenkspiegel angeordnete Detektionseinrichtung fällt.

Alternativ ist es auch möglich, dass der optische Arbeitsstrahl durch den Umlenkspiegel hindurchgeschickt wird, wobei dieser dann eine Transmissivität von weniger als 100 % aufweist, wobei in diesem Fall die Detektionseinrichtung derart angeordnet ist, dass das remittierte Licht durch den Umlenkspiegel teilweise umgelenkt und zu der Detektionseinrichtung geleitet wird.

Weiter ist es auch bevorzugt möglich, dass der optische Arbeitsstrahl durch eine Öffnung eines Umlenkspiegels hindurchtritt, wobei remittiertes Licht von der die Öffnung umgebenden Oberfläche des Umlenkspiegels zumindest teilweise umgelenkt und zu der Detektionseinrichtung geleitet wird. Insbesondere kann ein sogenannter Scraper-Spiegel verwendet werden.

Ist der Umlenkspiegel eingerichtet zur Umlenkung des optischen Arbeitsstrahls und zur Transmission des remittierten Lichts, weist er bevorzugt eine Reflektivität von mindestens 99 % bis höchstens 99,98 % auf. Ist der Umlenkspiegel eingerichtet zur Transmission des optischen Arbeitsstrahls und zur Reflexion des remittierten Lichts, weist er bevorzugt eine Transmissivität von mindestens 99 % bis höchstens 99,98 % auf.

Alternativ ist es auch möglich, anstelle des Umlenkspiegels einen Polarisationsstrahlteiler zu verwenden, wobei der optische Arbeitsstrahl in diesem Fall bevorzugt linear polarisiert ist. Durch die Remission, insbesondere Streuung, wird die Polarisation zumindest teilweise zerstört, wobei dann die zum einfallenden Arbeitsstrahl senkrechte Polarisationsrichtung nur das remittierte Signal enthält. Der Polarisationsstrahlteiler reflektiert somit bevorzugt das mit einer bestimmten Polarisationsrichtung linear polarisierte, einfallende Licht des optischen Arbeitsstrahls und transmittiert die zu der bestimmten Polarisationsrichtung senkrechte Polarisationsrichtung - oder umgekehrt.

Unter remittiertem Licht wird hier Licht verstanden, welches - insbesondere von einer Oberfläche in dem Arbeitsbereich - reflektiert und/oder gestreut wird. Dabei wird unter "Reflexion" hier im engeren Sinne gerichtete Reflexion verstanden, während unter "Streuung" diffuse Reflexion, insbesondere gemäß dem Lambert'schen Gesetz, verstanden wird.

Die Signalwerte werden insbesondere punktweise, insbesondere eindimensional, ortsabhängig erfasst. Jedem Ort der Verlagerung des optischen Arbeitsstrahls wird also bevorzugt genau ein Signalwert zugeordnet. Ein solcher Signalwert ist insbesondere ein Helligkeitswert.

Unter einer Abbildung des Arbeitsbereichs wird demgegenüber insbesondere eine zweidimensionale Abbildung des Arbeitsbereichs, insbesondere wenigstens eines Erfassungsabschnitts des Arbeitsbereichs, verstanden. Die Abbildung wird insbesondere erhalten, indem sie aus den ortsabhängig erfassten Signalwerten zusammengesetzt, berechnet oder in anderer Weise gebildet wird.

Gemäß einer Weiterbildung der Erfindung ist vorgesehen, dass kein Interferenzsignal erfasst wird. Insbesondere werden als Signalwerte keine Interferenzsignale erfasst. Das Verfahren ist dadurch sehr einfach durchführbar; außerdem wird bevorzugt eine einfache optische Abbildung des Arbeitsbereichs erhalten.

Alternativ oder zusätzlich werden bevorzugt Signalwerte erfasst, die mit steigender Intensität des remittierten Lichts zunehmen. Die Signalwerte hängen also in einfacher Weise mit der Intensität des remittierten Lichts zusammen. Auch insoweit wird insbesondere eine einfache optische Abbildung des Arbeitsbereichs erhalten, die insbesondere einfach ausgewertet werden kann.

Alternativ oder zusätzlich werden bevorzugt als Signalwerte Helligkeitswerte, insbesondere Helligkeitswerte des remittierten Lichts, erfasst. Auch dies stellt eine besonders einfache Ausgestaltung des Verfahrens dar, bei der insbesondere eine leicht auszuwertende optische Abbildung des Arbeitsbereichs erhalten wird.

Gemäß einer Weiterbildung der Erfindung ist vorgesehen, dass die Abbildung des Arbeitsbereichs zur Erkennung von geometrischen Strukturen ausgewertet wird. Es erfolgt also eine spezifische Auswertung der Abbildung im Rahmen des Verfahrens, um wenigstens eine geometrische Struktur in dem Arbeitsbereich zu erkennen. Besonders bevorzugt wird die Abbildung auf Kanten hin ausgewertet, insbesondere wird also bevorzugt eine Kantenerkennung auf die Abbildung angewendet.

Die Positioniergenauigkeit einer typischen Scannereinrichtung einer generativen Fertigungsvorrichtung erlaubt das Erhalten der Abbildung des Arbeitsbereichs mit einer Auflösung von ungefähr 40.000 Pixeln pro Quadratmillimeter, bei einem Pixelabstand von ungefähr 5 µm.

Mittels geeigneter Algorithmen zur Auswertung der Abbildung kann auch eine Kantenerkennung mit Sub-Pixel-Genauigkeit durchgeführt werden, sodass die Genauigkeit der Erfassung des Arbeitsbereichs, insbesondere der Erkennung einer Lage eines Vorformlings in dem Arbeitsbereich, noch weiter gesteigert werden kann.

Gemäß einer Weiterbildung der Erfindung ist vorgesehen, dass der Signalwert des remittierten Lichts durch eine auf der optischen Achse des optischen Arbeitsstrahls angeordnete Fotodiode erfasst wird. Dies stellt eine einfache und kostengünstige Möglichkeit dar, die optischen Signalwerte zu erfassen. Als Fotodiode wird bevorzugt eine Silizium-Fotodiode verwendet. Es ist möglich, dass die Fotodiode empfindlich ist im sichtbaren und/oder infraroten Spektralbereich. Vorzugsweise ist die Empfindlichkeit der Fotodiode abgestimmt auf den Wellenlängenbereich des optischen Arbeitsstrahls. In bevorzugter Weise kann eine Infrarot-Fotodiode oder eine Pyrometer-Diode verwendet werden.

Der Signalwert wird bevorzugt ortsaufgelöst erfasst, indem ein Ausgangssignal der Fotodiode zeitabhängig einem momentanen Zustand, insbesondere innerem Zustand, der Scannereinrichtung zugeordnet wird. Die Erfassung der Signalwerte, hier also des Ausgangssignals der Fotodiode, und die Verlagerung des optischen Arbeitsstrahls durch entsprechende Steuerung der Scannereinrichtung erfolgt somit insbesondere synchron, sodass jedem Signalwert ein Zustand der Scannereinrichtung und damit zugleich ein Ort in dem Arbeitsbereich zugeordnet werden kann. Der Zustand der Scannereinrichtung ist insbesondere eine Position von wenigstens einem beweglichen Spiegel der Scannereinrichtung, insbesondere einem galvanometrischen Spiegel, die ihrerseits wiederum einem Ort in dem Arbeitsbereich zugeordnet ist, auf den der optische Arbeitsstrahl gerichtet ist. Die ortsaufgelöste Erfassung der Signalwerte erfolgt somit unmittelbar im Koordinatensystem der Scannereinrichtung.

Gemäß einer Weiterbildung der Erfindung ist vorgesehen, dass eine Auflösung der Erfassung des Arbeitsbereichs eingestellt, vorzugsweise verändert wird. Insbesondere wird die Auflösung bevorzugt bedarfsabhängig gewählt. Besonders bevorzugt wird die Auflösung eingestellt, indem die Verlagerung des optischen Arbeitsstrahls mit entsprechender Schrittweite durchgeführt wird. Es ist aber auch möglich, die Auflösung durch gezielte zeitabhängige Auswertung der Detektionseinrichtung zu wählen, beispielsweise indem das Ausgangssignal nicht durchgängig, sondern vielmehr nur in vorbestimmten Intervallen erfasst wird, die größer sind als ein zeitlicher Abstand zweier aufeinanderfolgender Ausgangssignalwerte. Durch die Einstellung der Auflösung ist es möglich, zum einen eine hohe Auflösung bereitzustellen, wenn dies wünschenswert oder erforderlich ist, zum anderen aber das Datenaufkommen vorteilhaft zu reduzieren, wenn eine geringere Auflösung ausreicht.

Alternativ oder zusätzlich wird bevorzugt ein Erfassungsabschnitt des Arbeitsbereichs eingestellt, vorzugsweise geändert. Insbesondere wird der Erfassungsabschnitt bevorzugt bedarfsabhängig gewählt. Es ist auch möglich, dass mehrere, voneinander getrennte Erfassungsabschnitte definiert werden. Dies kann auch wiederum dadurch geschehen, dass der optische Arbeitsstrahl nur innerhalb eines bestimmten Erfassungsabschnitts verlagert wird, oder dadurch, dass das Ausgangssignal der Detektionseinrichtung nur innerhalb des vorgegebenen Erfassungsabschnitts ausgewertet wird.

Die Auflösung und/oder der Erfassungsabschnitt können insbesondere dynamisch, vorzugsweise per Softwarekonfiguration, gewählt werden. Insbesondere ist es so beispielsweise auch möglich, eine Pulverbettanalyse mit höherer Ortsauflösung vorzunehmen, als eine Erfassung einer Position eines Vorformlings, insbesondere um Fehler in dem Pulverbett, insbesondere in einer neu aufgetragenen Pulverschicht, genauer detektieren zu können.

Gemäß einer Weiterbildung der Erfindung ist vorgesehen, dass eine Position von wenigstens einem Vorformling innerhalb des Arbeitsbereichs aus der Abbildung des Arbeitsbereichs ermittelt wird. Unter einer Position des Vorformlings innerhalb des Arbeitsbereichs ist hier insbesondere eine Position des Vorformlings in dem Koordinatensystem des optischen Arbeitsstrahls zu verstehen, wobei der Vorformling in dem Arbeitsbereich angeordnet ist. Die Lage des Vorformlings in dem Arbeitsbereich kann - insbesondere in dem Koordinatensystem des optischen Arbeitsstrahls - mit dem hier vorgeschlagenen Verfahren mit sehr hoher Genauigkeit bestimmt werden, sodass generativ gefertigte Bauteilabschnitte auf dem Vorformling mit hoher Genauigkeit und Qualität, insbesondere mit äußerst geringem oder keinem Versatz, aufgebaut werden können.

Gemäß einer Weiterbildung der Erfindung ist vorgesehen, dass die Position des Vorformlings anhand von wenigstens einer in der Abbildung erkennbaren Kante des Vorformlings ermittelt wird. Unter einer in der Abbildung erkennbaren Kante ist insbesondere eine maschinell erkennbare Kante, insbesondere mithilfe eines Kantendetektionsalgorithmus, zu verstehen. Eine solche Kantenerkennung ermöglicht in sehr präziser und zugleich wenig aufwendiger Weise eine Ermittlung der Position des Vorformlings. Insbesondere bedarf es keiner zusätzlichen Arbeitsschritte oder Veränderungen an dem Vorformling.

Eine Kantenerkennung ist insbesondere anhand von scharfen Sprüngen in den ortsabhängig erfassten Signalwerten möglich. Insbesondere ändert sich an einer Kante das Remissionsverhalten des Vorformlings unstetig. Dies gilt auch dann, wenn der Vorformling von Pulvermaterial, nämlich Arbeitspulver der generativen Fertigungsvorrichtung, umgeben oder in Pulvermaterial eingebettet ist, wobei eine der Scannereinrichtung zugewandte Oberfläche des Vorformlings nicht von Pulvermaterial bedeckt ist. Überschreitet der optische Arbeitsstrahl einen Rand dieser Oberfläche, ändert sich das Remissionsverhalten von starker Streuung durch das Pulvermaterial auf zumindest eher gerichtete Reflexion auf der Oberfläche des Vorformlings - oder umgekehrt. Dabei weist der Signalwert typischerweise ein höheres Niveau, insbesondere eine höhere Helligkeit, auf, wenn das Licht des optischen Arbeitsstrahls diffus zurückgestreut wird, da eine wenigstens teilweise gerichtete Reflexion zumindest in einer großen Mehrzahl von Fällen von der optischen Achse des optischen Arbeitsstrahls weg gerichtet ist, sodass kein oder nur wenig Licht zu der Detektionseinrichtung zurückgelangt.

Unter einem Arbeitspulver wird dabei ein Pulvermaterial verstanden, welches in der generativen Fertigungsvorrichtung oder von der generativen Fertigungsvorrichtung zum Herstellen eines Bauteils aus dem Pulvermaterial verwendet wird.

Besonders bevorzugt wird das Verfahren durchgeführt mit einer aufgerauten Oberfläche des Vorformlings, wobei die Oberfläche besonders bevorzugt sand-, korund- oder glasperlengestrahlt ist. Auf diese Weise kann die Oberfläche des Vorformlings mit matt diffus streuenden optischen Eigenschaften ausgestattet werden, sodass sie in der Abbildung des Arbeitsbereichs nicht einfach dunkel - gegebenenfalls mit einzelnen Glanzpunkten - erscheint, sondern vielmehr gut erkennbar ist. Wird die Rauheit der Oberfläche geeignet eingestellt, ergibt sich dennoch ein hervorragender Kontrast zu eventuell in der Umgebung der Oberfläche angeordnetem Pulvermaterial. Beispielsweise kann es so auch möglich sein, den Signalwert von der aufgerauten Oberfläche über das Niveau des Signalwerts der Streuung des Pulvermaterials zu erhöhen.

Alternativ oder zusätzlich wird die Position des Vorformlings bevorzugt anhand von wenigstens einer Markierung ermittelt, die auf einer Oberfläche des Vorformlings vorgesehen ist. Auch auf diese Weise kann eine sehr hohe Genauigkeit der Positionsermittlung für den Vorformling erzielt werden.

Die Oberfläche des Vorformlings, auf der die Markierung angeordnet ist, ist insbesondere der Scannereinrichtung zugewandt. Insbesondere handelt es sich um eine Oberseite des Vorformlings.

Eine Markierung auf einer Oberfläche des Vorformlings bringt dort zumindest eine Kante ein, die dann wiederum mittels Kantenerkennung, insbesondere automatisch, erkannt werden kann.

Gemäß einer Weiterbildung der Erfindung ist vorgesehen, dass als Markierung auf der Oberfläche des Vorformlings wenigstens eine mit dem Arbeitspulver gefüllte Kerbe des Vorformlings verwendet wird. Die Oberfläche des Vorformlings ist im Übrigen nicht mit Arbeitspulver beschichtet, sodass - wie zuvor beschrieben - ein deutlicher Unterschiede in den ortsabhängig erfassten Signalwerten auftritt, abhängig davon, ob der optische Arbeitsstrahl innerhalb der Kerbe auf Arbeitspulver fällt, oder außerhalb der Kerbe auf die im Wesentlichen gerichtet reflektierende Oberfläche des Vorformlings.

Eine Breite der wenigstens einen Kerbe ist insbesondere sehr viel kleiner, als eine Erstreckung der Kerbe entlang ihrer Längsrichtung, mithin ihrer längsten Erstreckung.

Bevorzugt werden als Markierung zumindest zwei schräg zueinander orientierte, vorzugsweise senkrecht aufeinander stehende Kerben, insbesondere in Form eines Kreuzes, verwendet, wobei bevorzugt beide Kerben mit Arbeitspulver gefüllt sind.

Eine Positionsermittlung des Vorformlings anhand wenigstens einer Markierung auf der Oberfläche des Vorformlings kann auch erfolgen, indem ein Prozessleuchten entlang der optischen Achse des optischen Arbeitsstrahls beobachtet wird, welches durch den optischen Arbeitsstrahl auf der Oberfläche des Vorformlings - und gegebenenfalls in der mit Arbeitspulver gefüllten Kerbe - hervorgerufen wird. Das Prozessleuchten ist im Bereich des Pulvermaterials deutlich stärker als auf der pulvermaterialfreien Oberfläche des Vorformlings, insbesondere aufgrund der im Vergleich zum blanken Metall erhöhten Absorption bei gleichzeitig verringerter Wärmeleitfähigkeit.

Vorzugsweise werden das Prozessleuchten und die jeweils dazugehörige Position des optischen Arbeitsstrahls in einer Messkarte protokolliert. Vorzugsweise werden dann mithilfe einer Analysesoftware Lage und/oder Schnittpunkte arbeitspulvergefüllter Kerben und somit letztlich auch die Position des Vorformlings im Koordinatensystem des Arbeitsstrahls, insbesondere im Koordinatensystem der Scannereinrichtung, ermittelt.

Der Arbeitsbereich wird bevorzugt mit dem optischen Arbeitsstrahl punktweise entlang parallel zueinander versetzter Linien abgetastet, insbesondere abgerastert.

Zur Detektion der Position des Vorformlings anhand der wenigstens einen Markierung auf der Oberfläche des Vorformlings kann alternativ oder zusätzlich auch eine von der optischen Achse entfernte, also außerhalb der optischen Achse des optischen Arbeitsstrahls angeordnete Kamera, oder eine außerhalb der optischen Achse angeordnete Fotodiode, insbesondere eine Pyrometer-Diode, verwendet werden.

Es wird auch eine Ausgestaltung des Verfahrens bevorzugt, bei welcher die Abbildung des Arbeitsbereichs zur Pulverbettüberwachung, insbesondere zur Detektion von Fehlern einer neu aufgetragenen Pulverschicht, zur Analyse einer aufgeschmolzenen Pulverschicht, und/oder zur Überwachung eines entstehenden, generativ gefertigten Bauteils eingesetzt wird. Dabei ist es insbesondere möglich, dass zwischen generativen Fertigungsschritten Schritte der Erfassung des Arbeitsbereichs zwischengeschaltet werden. Insbesondere kann in den generativen Fertigungsschritten der optische Arbeitsstrahl mit einer ersten optischen Ausgangsleistung erzeugt werden, wobei er in den Erfassungsschritten mit einer zweiten optischen Ausgangsleistung erzeugt wird, die kleiner ist als die erste optische Ausgangsleistung.

Gemäß einer Weiterbildung der Erfindung ist vorgesehen, dass der optische Arbeitsstrahl zum Erfassen des Arbeitsbereichs mit einer optischen Ausgangsleistung betrieben wird, die geringer ist als eine untere Leistungsgrenze für die optische Ausgangsleistung des optischen Arbeitsstrahls zum generativen Fertigen. Auf diese Weise wird eine Veränderung von in dem Arbeitsbereich angeordnetem Material, sei es Pulvermaterial oder ein Vorformling, vermieden. Die untere Leistungsgrenze ist dabei insbesondere so gewählt, dass erst ab dieser unteren Leistungsgrenze oder oberhalb dieser unteren Leistungsgrenze eine Materialveränderung, insbesondere ein Sintern oder Schmelzen, insbesondere von dem Pulvermaterial der generativen Fertigungsvorrichtung auftritt, sodass die generative Fertigung mit dem optischen Arbeitsstrahl möglich ist. Die optische Ausgangsleistung des optischen Arbeitsstrahls wird somit für die generative Fertigung bevorzugt höher gewählt als die untere Leistungsgrenze. Somit sind ein Betriebsmodus zum Erfassen des Arbeitsbereichs einerseits und ein Betriebsmodus zum generativen Fertigen andererseits bezüglich der gewählten optischen Ausgangsleistung des optischen Arbeitsstrahls deutlich voneinander separiert. Auf diese Weise können insbesondere einfache und/oder einfach zu interpretierende optische Abbildungen des unveränderten, vorzugsweise von dem Arbeitsstrahl nicht beeinflussten Arbeitsbereichs erhalten werden, insbesondere vor dem eigentlichen Arbeitsprozess, das heißt dem generativen Fertigen.

Insbesondere wird derselbe optische Arbeitsstrahl - bis gegebenenfalls auf die Reduzierung der optischen Ausgangsleistung - sowohl für die generative Fertigung als auch für die Erfassung des Arbeitsbereichs verwendet.

Die untere Leistungsgrenze beträgt gemäß einer bevorzugten Ausgestaltung 100 W. Der optische Arbeitsstrahl wird zum Erfassen des Arbeitsbereichs vorzugsweise mit einer optischen Ausgangsleistung von mindestens 1 W bis höchstens 99,9 W, insbesondere von mindestens 2 W bis höchstens 50 W betrieben. Zum generativen Fertigen wird der optische Arbeitsstrahl vorzugsweise mit einer optischen Ausgangsleistung von mindestens 100 W, vorzugsweise mehr als 100 W, vorzugsweise von mindestens 100 W bis höchstens 500 W, betrieben.

Die Aufgabe wird schließlich auch gelöst, indem eine Fertigungsvorrichtung gemäß Anspruch 10 zum generativen Fertigen eines Bauteils aus einem Pulvermaterial geschaffen wird, welche eine Strahleinrichtung aufweist, die eingerichtet ist zum Erzeugen eines optischen Arbeitsstrahls, um ein Bauteil mittels des optischen Arbeitsstrahls generativ, insbesondere additiv, aus einem Pulvermaterial zu fertigen. Die Fertigungsvorrichtung weist außerdem einen Arbeitsbereich auf, der eingerichtet ist zum generativen Fertigen eines Bauteils aus dem Pulvermaterial in dem Arbeitsbereich. Außerdem weist die Fertigungsvorrichtung eine Scannereinrichtung auf, die eingerichtet ist zum Verlagern des optischen Arbeitsstrahls in dem Arbeitsbereich. Weiterhin weist die Fertigungsvorrichtung eine Detektionseinrichtung auf, die eingerichtet ist zum Erfassen von entlang einer optischen Achse des optischen Arbeitsstrahls remittiertem Licht des optischen Arbeitsstrahls, wobei die Detektionseinrichtung auf der optischen Achse des optischen Arbeitsstrahls angeordnet ist. Schließlich weist die Fertigungsvorrichtung eine Steuereinrichtung auf, die eingerichtet ist, um die Scannereinrichtung zum Verlagern des optischen Arbeitsstrahls in dem Arbeitsbereich anzusteuern, um ortsabhängig Signalwerte der Detektionseinrichtung während des Verlagerns des optischen Arbeitsstrahls zu erfassen, sowie jedem Ort der Verlagerung des optischen Arbeitsstrahls in dem Arbeitsbereich einen Signalwert der Detektionseinrichtung zuzuordnen, und um eine Abbildung des Arbeitsbereichs aus den ortsabhängig erfassten Signalwerten zu erhalten. In Zusammenhang mit der Fertigungsvorrichtung verwirklichen sich insbesondere die Vorteile, die bereits in Zusammenhang mit dem Verfahren erläutert wurden.

Die Fertigungsvorrichtung ist insbesondere eingerichtet zur Durchführung eines erfindungsgemäßen Verfahrens oder eines Verfahrens nach einer der zuvor beschriebenen Ausführungsformen.

Insbesondere ist die Steuereinrichtung eingerichtet, um den optischen Arbeitsstrahl zum Erfassen des Arbeitsbereichs mit einer optischen Ausgangsleistung zu betreiben, die im Vergleich zu einer unteren Leistungsgrenze für die optische Ausgangsleistung des optischen Arbeitsstrahls zum generativen Fertigen reduziert ist.

Insbesondere ist die generative Fertigungsvorrichtung eingerichtet zum schichtweisen Aufbauen eines Bauteils aus einem Pulvermaterial, insbesondere zur Durchführung eines pulverbettbasierten Fertigungsverfahrens, insbesondere ausgewählt aus der in diesem Zusammenhang oben offenbarten Gruppe.

Insbesondere ist die Steuereinrichtung bevorzugt eingerichtet, um die Abbildung des Arbeitsbereichs aus den ortsabhängig erfassten Signalwerten zusammenzusetzen, zu berechnen oder anderweitig zu bilden.

Weiter ist die Steuereinrichtung bevorzugt eingerichtet, um die Abbildung des Arbeitsbereichs zur Erkennung von geometrischen Strukturen auszuwerten, insbesondere eine Kantenerkennung durchzuführen.

Gemäß einer Weiterbildung der Erfindung ist vorgesehen, dass die Strahleinrichtung einen Laser aufweist oder als Laser ausgebildet ist. Alternativ oder zusätzlich weist die Detektionseinrichtung eine Fotodiode auf oder ist als Fotodiode ausgebildet.

Die Erfindung wird im Folgenden anhand der Zeichnung näher erläutert. Dabei zeigen:
- Figur 1: eine schematische Darstellung eines Ausführungsbeispiels einer Fertigungsvorrichtung, die eingerichtet ist zur Durchführung einer Ausführungsform eines Verfahrens zum Erfassen eines Arbeitsbereichs der Fertigungsvorrichtung, und
- Figur 2: eine schematische Darstellung einer Ausführungsform des Verfahrens zum Erfassen des Arbeitsbereichs der Fertigungsvorrichtung in Form eines Flussdiagramms.

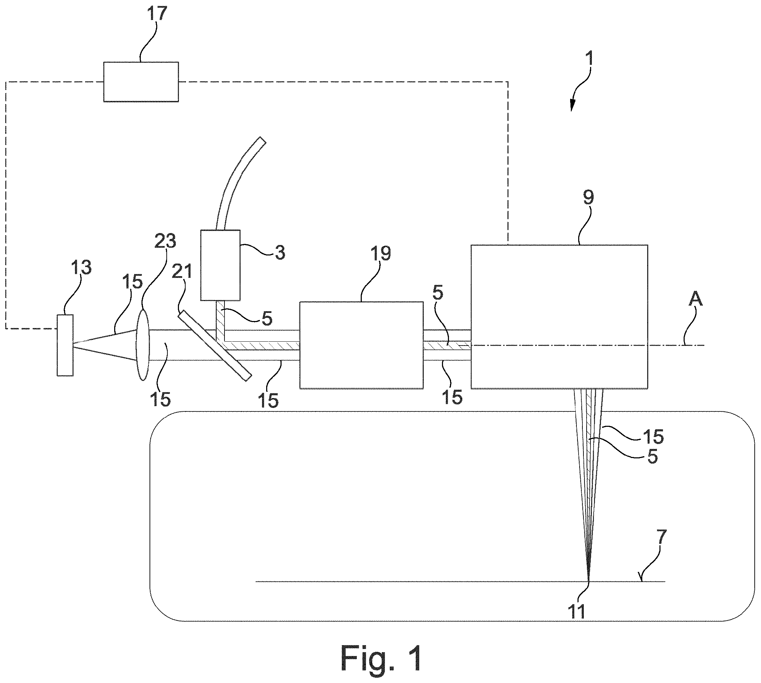

**Fig. 1** zeigt eine schematische Darstellung eines Ausführungsbeispiels einer Fertigungsvorrichtung 1, die eingerichtet ist zum generativen, insbesondere additiven Fertigen eines Bauteils aus einem Pulvermaterial. Die Fertigungsvorrichtung 1 weist hierzu eine Strahleinrichtung 3 auf, die eingerichtet ist zum Erzeugen eines optischen Arbeitsstrahls 5. Mittels des optischen Arbeitsstrahls 5 ist ein Bauteil in einem Arbeitsbereich 7 der Fertigungsvorrichtung 1 generativ, insbesondere additiv fertigbar, insbesondere indem ein in dem Arbeitsbereich 7 angeordnetes Pulvermaterial, das auch als Arbeitspulver der generativen Fertigungsvorrichtung 1 bezeichnet wird, durch den optischen Arbeitsstrahl 5 bereichsweise geschmolzen oder gesintert wird, um in im Übrigen für sich genommen bekannter Weise ein Bauteil schichtweise generativ, insbesondere additiv aufzubauen.

Die Strahleinrichtung 3 ist insbesondere als Laser ausgebildet, und der optische Arbeitsstrahl 5 ist bevorzugt ein Laserstrahl. Dieser kann gepulst oder kontinuierlich erzeugt werden.

Die Fertigungsvorrichtung 1 weist außerdem eine Scannereinrichtung 9 auf, die eingerichtet ist, um den optischen Arbeitsstrahl 5 in dem Arbeitsbereich 7 zu verlagern. Hierzu weist die Scannereinrichtung 9 bevorzugt zumindest einen beweglichen Spiegel, vorzugsweise zumindest zwei bewegliche Spiegel, insbesondere Galvanometerspiegel auf, wobei ein momentaner Zustand der Scannereinrichtung 9, das heißt insbesondere eine momentane Position des wenigstens einen beweglichen Spiegels, jeweils einem Ort 11 in dem Arbeitsbereich 7 zugeordnet ist, auf den der Arbeitsstrahl 5 momentan ausgerichtet ist. Durch Verändern des Zustands der Scannereinrichtung 9, das heißt Ändern der Position insbesondere des wenigstens einen Spiegels, kann bevorzugt der gesamte Arbeitsbereich 7 durch den optischen Arbeitsstrahl 5 abgetastet werden.

Die Fertigungsvorrichtung 1 weist außerdem eine Detektionseinrichtung 13 auf, die eingerichtet ist, um entlang einer optischen Achse A des optischen Arbeitsstrahls 5 remittiertes Licht 15 des optischen Arbeitsstrahls 5 zu erfassen. Dabei ist die Detektionseinrichtung 13 auf der optischen Achse A angeordnet. Eine optische Achse A der generativen Fertigungsvorrichtung 1 ist hier insbesondere eine Achse, entlang derer sich der optische Arbeitsstrahl 5 zumindest bereichsweise erstreckt.

Weiterhin weist die generative Fertigungsvorrichtung 1 eine Steuereinrichtung 17 auf, die eingerichtet ist, um die Scannereinrichtung 9 zum Verlagern des optischen Arbeitsstrahls 5 in dem Arbeitsbereich 7 anzusteuern. Hierzu ist die Steuereinrichtung 17 insbesondere mit der Scannereinrichtung 9 wirkverbunden. Weiterhin ist die Steuereinrichtung 17 eingerichtet, um ortsabhängig Signalwerte der Detektionseinrichtung 13 während des Verlagerns des optischen Arbeitsstrahls 5 zu erfassen, und um jedem Ort 11 der Verlagerung des optischen Arbeitsstrahls 5 in dem Arbeitsbereich 7 einen Signalwert der Detektionseinrichtung 13 zuzuordnen. Die Steuereinrichtung 17 ist außerdem eingerichtet, um eine Abbildung des Arbeitsbereichs 7 aus den ortsabhängig erfassten Signalwerten zu erhalten, insbesondere zusammenzusetzen, zu berechnen oder anderweitig zu bilden.

Auf diese Weise ist es mit hoher Genauigkeit möglich, einfach und zugleich kostengünstig den Arbeitsbereich 7 zu erfassen, insbesondere die Lage eines Vorformlings in dem Arbeitsbereich 7 genau zu bestimmen, insbesondere indem diese Lage im Koordinatensystem der Scannereinrichtung 9 vermessen wird. Dadurch ist es nicht notwendig, die absolute Position des Orts 11 im Arbeitsbereich 7 präzise zu kennen.

Die Fertigungsvorrichtung 1 weist hier eine Fokussiereinheit 19, insbesondere eine dynamische Fokussiereinheit 19, auf, um den optischen Arbeitsstrahl 5 unabhängig von dem momentanen Zustand der Scannereinrichtung 9 stets genau auf den Arbeitsbereich 7 zu fokussieren. Hierbei bedarf es einer dynamischen Fokussierung insbesondere deshalb, weil der Abstand des momentan durch den optischen Arbeitsstrahl 5 anvisierten Orts 11 von der Scannereinrichtung 9 mit der momentanen Position dieses Orts 11 und damit auch dem momentanen Zustand der Scannereinrichtung 9 variiert. Dies wiederum resultiert aus der ebenen Geometrie des Arbeitsbereichs 7 und der Art der Verlagerung des optischen Arbeitsstrahls 5 durch die Scannereinrichtung 9, wobei Orte mit konstantem Abstand zu der Scannereinrichtung 9 auf einer Halbkugel um die Scannereinrichtung 9 angeordnet wären.

Im Strahlengang des optischen Arbeitsstrahls 5 ist hier ein Umlenkspiegel 21 angeordnet, durch den der optische Arbeitsstrahl 5 ausgehend von der Strahleinrichtung 3 zu der Scannereinrichtung 9, hier insbesondere zu der Fokussiereinheit 19, umgelenkt wird. Der Umlenkspiegel 21 weist eine Reflektivität auf, die geringer ist als 100 %. Daher ist er teiltransparent für das entlang der optischen Achse A remittierte Licht 15, welches den Umlenkspiegel 21 entlang der optischen Achse A zumindest teilweise transmittiert und so zu der Detektionseinrichtung 13 gelangt. Dabei ist im Strahlengang des remittierten Lichts 15 hinter dem Umlenkspiegel 21 bevorzugt eine Sammellinse 23 angeordnet, die das remittierte Licht 15 auf die Detektionseinrichtung 13 bündelt, insbesondere den Ort 11 auf die Detektionseinrichtung 13 abbildet. Anstelle des Umlenkspiegels 21 kann auch ein Scraper-Spiegel oder ein Polarisationsstrahlteiler verwendet werden, wobei im letzteren Fall der optische Arbeitsstrahl 5 bevorzugt linear polarisiert ist.

Die Detektionseinrichtung 13 ist bevorzugt als Fotodiode, insbesondere als Silizium-Fotodiode ausgebildet.

Die Signalwerte der Detektionseinrichtung 13 werden durch die Steuereinrichtung 17 bevorzugt ortsaufgelöst erfasst, indem ein Ausgangssignal der Detektionseinrichtung 13 zeitabhängig einem synchronen Zustand der Scannereinrichtung 9, und damit zugleich einem momentanen Ort 11 in dem Arbeitsbereich 7, zugeordnet wird.

Als Signalwerte werden bevorzugt keine Interferenzsignale erfasst. Alternativ oder zusätzlich werden bevorzugt Signalwerte erfasst, die mit steigender Intensität des remittierten Lichts zunehmen. Alternativ oder zusätzlich werden als Signalwerte bevorzugt Helligkeitswerte erfasst, insbesondere Helligkeitswerte des remittierten Lichts.

Die Steuereinrichtung 17 ist bevorzugt eingerichtet, um die Abbildung des Arbeitsbereichs 7 zur Erkennung von geometrischen Strukturen auszuwerten, insbesondere mittels Kantenerkennung.

Eine Auflösung der Erfassung und/oder ein Erfassungsabschnitt innerhalb des Arbeitsbereichs 7 ist/sind bevorzugt einstellbar, insbesondere änderbar.

Vorzugsweise wird durch die Steuereinrichtung 17 insbesondere eine Position von wenigstens einem Vorformling innerhalb des Arbeitsbereichs 7 aus der Abbildung des Arbeitsbereichs 7 ermittelt, besonders bevorzugt anhand von wenigstens einer in der Abbildung erkennbaren Kante des Vorformlings, und/oder anhand von wenigstens einer Markierung auf einer Oberfläche des Vorformlings. Dabei wird als Markierung bevorzugt wenigstens eine mit dem Arbeitspulver der generativen Fertigungsvorrichtung 1 gefüllte Kerbe des Vorformlings verwendet.

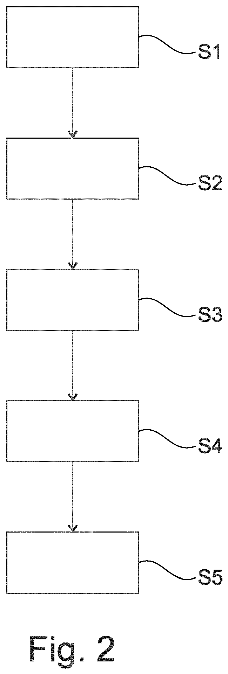

**Fig. 2** zeigt eine schematische Darstellung einer Ausführungsform des Verfahrens zum Erfassen des Arbeitsbereichs 7 der generativen Fertigungsvorrichtung 1 in Form eines Flussdiagramms. Dabei wird in einem ersten Schritt S1 der optische Arbeitsstrahl 5 in dem Arbeitsbereich 7 verlagert. In einem zweiten Schritt S2 werden Signalwerte des entlang der optischen Achse A remittierten Lichts 15 ortsabhängig erfasst, insbesondere im Koordinatensystem der Scannereinrichtung 9. In einem dritten Schritt S3 wird jedem Ort 11 der Verlagerung des optischen Arbeitsstrahls 5 in dem Arbeitsbereich 7 ein Signalwert zugeordnet, und in einem vierten Schritt S4 wird eine Abbildung des Arbeitsbereichs 7 aus den ortsabhängig erfassten Signalwerten erhalten, insbesondere zusammengesetzt, berechnet oder anderweitig gebildet.

In einem fünften Schritt S5 erfolgt bevorzugt einer Auswertung der Abbildung, insbesondere eine automatisierte Auswertung mittels der Steuereinrichtung 17. Dabei wird die Abbildung bevorzugt zur Erkennung von geometrischen Strukturen, insbesondere mittels eines Kantenerkennungsalgorithmus, ausgewertet. Besonders bevorzugt wird anhand der Abbildung eine Position von wenigstens einem Vorformling in dem Arbeitsbereich 7 ermittelt. Es ist aber auch möglich, dass die Abbildung zur Pulverbettüberwachung, zur Analyse einer aufgeschmolzenen Pulverschicht, und/oder zur Überwachung eines entstehenden, generativ gefertigten Bauteils eingesetzt wird.

Vorzugsweise wird während der Erfassung des optischen Arbeitsbereichs 7 die optische Ausgangsleistung des optischen Arbeitsstrahls 5 im Vergleich zu der optischen Ausgangsleistung des Arbeitsstrahls 5 beim generativen Fertigen reduziert.

## Patentansprüche

1. Verfahren zum Erfassen eines Arbeitsbereichs (7) einer generativen Fertigungsvorrichtung (1), mit folgenden Schritten:
- Verlagern eines optischen Arbeitsstrahls (5) der generativen Fertigungsvorrichtung (1) in dem Arbeitsbereich (7);
- ortsabhängiges Erfassen von Signalwerten von entlang einer optischen Achse (A) des optischen Arbeitsstrahls (5) remittiertem Licht (15) des optischen Arbeitsstrahls (5), wobei jedem Ort (11) der Verlagerung des optischen Arbeitsstrahls (5) in dem Arbeitsbereich (7) ein Signalwert zugeordnet wird, und
- Erhalten einer Abbildung des Arbeitsbereichs (7) aus den ortsabhängig erfassten Signalwerten,
**dadurch gekennzeichnet, dass**
- der optische Arbeitsstrahl (5) zum Erfassen des Arbeitsbereichs (7) mit einer optischen Ausgangsleistung betrieben wird, die im Vergleich zu einer unteren Leistungsgrenze für die optische Ausgangsleistung des optischen Arbeitsstrahls (5) zum generativen Fertigen reduziert ist.

2. Verfahren nach Anspruch 1, **dadurch gekennzeichnet, dass** die generative Fertigungsvorrichtung (1) eingerichtet ist zum schichtweisen Aufbauen eines Bauteils aus einem Pulvermaterial, insbesondere zur Durchführung eines pulverbettbasierten Fertigungsverfahrens.

3. Verfahren nach einem der vorhergehenden Ansprüche, **dadurch gekennzeichnet, dass**
a) kein Interferenzsignal erfasst wird; und/oder
b) Signalwerte erfasst werden, die mit steigender Intensität des remittierten Lichts (15) zunehmen; und/oder
c) als Signalwerte Helligkeitswerte erfasst werden.

4. Verfahren nach einem der vorhergehenden Ansprüche, **dadurch gekennzeichnet, dass** die Abbildung des Arbeitsbereichs (7) zur Erkennung von geometrischen Strukturen ausgewertet wird.

5. Verfahren nach einem der vorhergehenden Ansprüche, **dadurch gekennzeichnet, dass** der Signalwert des remittierten Lichts (15) durch eine auf der optischen Achse (A) des optischen Arbeitsstrahls (5) angeordnete Fotodiode erfasst wird, wobei der Signalwert ortsaufgelöst erfasst wird, indem ein Ausgangssignal der Fotodiode zeitabhängig einem synchronen Zustand einer Scannereinrichtung (9) zum Verlagern des optischen Arbeitsstrahls (5) zugeordnet wird.

6. Verfahren nach einem der vorhergehenden Ansprüche, **dadurch gekennzeichnet, dass** eine Auflösung der Erfassung und/oder ein Erfassungsabschnitt des Arbeitsbereichs (7) eingestellt wird/werden.

7. Verfahren nach einem der vorhergehenden Ansprüche, **dadurch gekennzeichnet, dass** eine Position von wenigstens einem Vorformling innerhalb des Arbeitsbereichs (7) aus der Abbildung des Arbeitsbereichs (7) ermittelt wird.

8. Verfahren nach einem der vorhergehenden Ansprüche, **dadurch gekennzeichnet, dass** die Position des Vorformlings anhand von
a) wenigstens einer in der Abbildung erkennbaren Kante des Vorformlings, und/oder
b) wenigstens einer Markierung auf einer Oberfläche des Vorformlings
ermittelt wird.

9. Verfahren nach einem der vorhergehenden Ansprüche, **dadurch gekennzeichnet, dass** als Markierung auf der Oberfläche des Vorformlings wenigstens eine mit einem Arbeitspulver der generativen Fertigungsvorrichtung (1) gefüllte Kerbe des Vorformlings verwendet wird.

10. Fertigungsvorrichtung zum generativen Fertigen eines Bauteils aus einem Pulvermaterial, mit
- einer Strahleinrichtung (3), die eingerichtet ist zum Erzeugen eines optischen Arbeitsstrahls (5), um ein Bauteil mittels des optischen Arbeitsstrahls (5) generativ aus einem Pulvermaterial zu fertigen,
- einem Arbeitsbereich (7), der eingerichtet ist zum generativen Fertigen eines Bauteils aus dem Pulvermaterial in dem Arbeitsbereich (7),
- einer Scannereinrichtung (9), die eingerichtet ist zum Verlagern des optischen Arbeitsstrahls (5) in dem Arbeitsbereich (7),
- einer Detektionseinrichtung (13), die eingerichtet ist zum Erfassen von entlang einer optischen Achse (A) des optischen Arbeitsstrahls (5) remittiertem Licht (15) des optischen Arbeitsstrahls (5), wobei
- die Detektionseinrichtung (13) auf einer optischen Achse (A) des optischen Arbeitsstrahls (5) angeordnet ist, und mit
- einer Steuereinrichtung (17), die eingerichtet ist, um die Scannereinrichtung (9) zum Verlagern des optischen Arbeitsstrahls (5) in dem Arbeitsbereich (7) anzusteuern, um ortsabhängig Signalwerte der Detektionseinrichtung (13) während des Verlagerns des optischen Arbeitsstrahls (5) zu erfassen, um jedem Ort (11) der Verlagerung des optischen Arbeitsstrahls (5) in dem Arbeitsbereich (7) einen Signalwert der Detektionseinrichtung (13) zuzuordnen, und um eine Abbildung des Arbeitsbereichs (7) aus den ortsabhängig erfassten Signalwerten zu erhalten,
**dadurch gekennzeichnet, dass**
- die Steuereinrichtung (17) eingerichtet ist, um den optischen Arbeitsstrahl (5) zum Erfassen des Arbeitsbereichs (7) mit einer optischen Ausgangsleistung zu betreiben, die im Vergleich zu einer unteren Leistungsgrenze für die optische Ausgangsleistung des optischen Arbeitsstrahls (5) zum generativen Fertigen reduziert ist.

11. Fertigungsvorrichtung (1) nach Anspruch 10, **dadurch gekennzeichnet, dass** die Strahleinrichtung (3) einen Laser aufweist oder als Laser ausgebildet ist, und/oder dass die Detektionseinrichtung (13) eine Fotodiode aufweist oder als Fotodiode ausgebildet ist.

## Claims

1. A method for the detecting of a working area (7) of a generative manufacturing device (1), comprising the following steps:
- scanning an optical working beam (5) of the generative manufacturing device (1) in the working area (7);
- detecting, as a function of location, signal values of light (15) of the optical working beam (5), the light remitted along an optical axis (A) of the optical working beam (5), wherein a signal value is assigned to each location (11) of the scan of the optical working beam (5) in the working area (7), and
- obtaining an image of the working area (7) from the signal values detected as a function of location,
**characterized in that**
- the optical working beam (5) for the detecting of the working area (7) is operated at an optical output power that is reduced compared to a lower power limit for the optical output power of the optical working beam (5) for the generative manufacturing.

2. The method according to claim 1, **characterized in that** the generative manufacturing device (1) is configured for the building up of a component layer-by-layer from a powder material, in particular for the carrying out of a powder bed-based manufacturing process.

3. The method according to any one of the preceding claims, **characterized in that**
a) no interference signal is detected; and/or
b) signal values are detected which increase with increasing intensity of the remitted light (15); and/or
c) brightness values are detected as signal values.

4. The method according to any one of the preceding claims, **characterized in that** the image of the working area (7) is evaluated for purposes of recognizing geometric structures.

5. The method according to any one of the preceding claims, **characterized in that** the signal value of the remitted light (15) is detected by a photodiode arranged on the optical axis (A) of the optical working beam (5), wherein the signal value is detected in a spatially resolved manner **in that** an output signal of the photodiode is assigned as a function of time to a synchronous state of a scanner apparatus (9) for the scanning of the optical working beam (5).

6. The method according to any one of the preceding claims, **characterized in that** a resolution of the detection and/or a detection section of the working area (7) is/are adjusted.

7. The method according to any one of the preceding claims, **characterized in that** a position of at least one preform within the working area (7) is determined from the image of the working area (7).

8. The method according to any one of the preceding claims, **characterized in that** the position of the preform is determined based on
a) at least one edge of the preform recognizable in the image, and/or
b) at least one marking on a surface of the preform.

9. The method according to any one of the preceding claims, **characterized in that** at least one preform notch filled with a working powder of the generative manufacturing device (1) is used as a marking on the surface of the preform.

10. A manufacturing device for the generative manufacturing of a component from a powder material, comprising
- a beam apparatus (3) configured for the generating of an optical working beam (5) in order to generatively manufacture a component from a powder material by means of the optical working beam (5),
- a working area (7) configured for the generative manufacturing of a component from the powder material in the working area (7),
- a scanner apparatus (9) configured for the scanning of the optical working beam (5) in the working area (7),
- a detection apparatus (13) configured for the detecting of light (15) of the optical working beam (5) which is remitted along an optical axis (A) of the optical working beam (5), wherein
- the detection apparatus (13) is arranged on an optical axis (A) of the optical working beam (5), and comprising
- a control apparatus (17) configured in order to control the scanner apparatus (9) for the scanning of the optical working beam (5) in the working area (7) to detect, as a function of location, signal values of the detection apparatus (13) during the scanning of the optical working beam (5), to assign a signal value of the detection apparatus (13) to each scanning location (11) of the optical working beam (5) in the working area (7), and to obtain an image of the working area (7) from the signal values detected as a function of location,
**characterized in that**
- the control apparatus (17) is configured in order to operate the optical working beam (5) for the detecting of the working area (7) at an optical output power that is reduced compared to a lower power limit for the optical output power of the optical working beam (5) for the generative manufacturing.

11. The manufacturing device (1) according to claim 10, **characterized in that** the beam apparatus (3) has a laser or is designed as a laser, and/or that the detection apparatus (13) has a photodiode or is designed as a photodiode.

## Revendications

1. Procédé pour la détection d'une zone de travail (7) d'un dispositif de fabrication (1) générative, comprenant les étapes suivantes :
- le déplacement d'un faisceau de travail optique (5) du dispositif de fabrication (1) générative dans la zone de travail (7) ;
- la détection, en fonction de la position, de valeurs de signal de la lumière renvoyée (15) du faisceau de travail optique (5) le long d'un axe optique (A) du faisceau de travail optique (5), dans lequel une valeur de signal est associée à chaque position (11) du déplacement du faisceau de travail optique (5) dans la zone de travail (7), et
- l'obtention d'une image de la zone de travail (7) à partir des valeurs de signal détectées en fonction de la position,
**caractérisé en ce que**
- le faisceau de travail optique (5) est exploité, pour la détection de la zone de travail (7), avec une puissance de sortie optique qui est réduite par rapport à une limite inférieure de puissance pour la puissance de sortie optique du faisceau de travail optique (5) pour la fabrication générative.

2. Procédé selon la revendication 1, **caractérisé en ce que** le dispositif de fabrication (1) générative est configuré pour construire un composant couche par couche à partir d'un matériau pulvérulent, en particulier pour la mise en œuvre d'un procédé de fabrication basé sur un lit de poudre.

3. Procédé selon l'une quelconque des revendications précédentes, **caractérisé en ce que**
a) aucun signal d'interférence n'est détecté ; et/ou
b) des valeurs de signal sont détectées, lesquelles augmentent avec l'intensité croissante de la lumière renvoyée (15) ; et/ou
c) des valeurs de luminosité sont détectées en tant que valeurs de signal.

4. Procédé selon l'une quelconque des revendications précédentes, **caractérisé en ce que** l'image de la zone de travail (7) est analysée pour la reconnaissance de structures géométriques.

5. Procédé selon l'une quelconque des revendications précédentes, **caractérisé en ce que** la valeur de signal de la lumière renvoyée (15) est détectée par une photodiode disposée sur l'axe optique (A) du faisceau de travail optique (5), dans lequel la valeur de signal est détectée avec une résolution spatiale en associant, en fonction du temps, un signal de sortie de la photodiode à un état synchrone d'un dispositif de balayage (9) pour le déplacement du faisceau de travail optique (5).

6. Procédé selon l'une quelconque des revendications précédentes, **caractérisé en ce qu'**une résolution de la détection et/ou une section de détection de la zone de travail (7) est/sont réglée(s).

7. Procédé selon l'une quelconque des revendications précédentes, **caractérisé en ce qu'**une position d'au moins un préformé à l'intérieur de la zone de travail (7) est déterminée à partir de l'image de la zone de travail (7).

8. Procédé selon l'une quelconque des revendications précédentes, **caractérisé en ce que** la position du préformé est déterminée à l'aide de
a) au moins une arête du préformé reconnaissable dans l'image, et/ou
b) au moins un marquage sur une surface du préformé.

9. Procédé selon l'une quelconque des revendications précédentes, **caractérisé en ce qu'**au moins une entaille du préformé remplie d'une poudre de travail du dispositif de fabrication (1) générative est utilisée comme marquage sur la surface du préformé.

10. Dispositif de fabrication pour la fabrication générative d'un composant à partir d'un matériau pulvérulent, comprenant
- un dispositif de faisceau (3), qui est configuré pour générer un faisceau de travail optique (5), afin de fabriquer de manière générative un composant à partir d'un matériau pulvérulent au moyen du faisceau de travail optique (5),
- une zone de travail (7), qui est configurée pour la fabrication générative d'un composant à partir du matériau pulvérulent dans la zone de travail (7),
- un dispositif de balayage (9), qui est configuré pour déplacer le faisceau de travail optique (5) dans la zone de travail (7),
- un dispositif de détection (13), qui est configuré pour détecter la lumière renvoyée (15) du faisceau de travail optique (5) le long d'un axe optique (A) du faisceau de travail optique (5), dans lequel
- le dispositif de détection (13) est disposé sur un axe optique (A) du faisceau de travail optique (5), et comprenant
- un dispositif de commande (17), qui est configuré pour commander le dispositif de balayage (9) afin de déplacer le faisceau de travail optique (5) dans la zone de travail (7), pour détecter, en fonction de la position, des valeurs de signal du dispositif de détection (13) pendant le déplacement du faisceau de travail optique (5), pour associer à chaque position (11) du déplacement du faisceau de travail optique (5) dans la zone de travail (7) une valeur de signal du dispositif de détection (13), et pour obtenir une image de la zone de travail (7) à partir des valeurs de signal détectées en fonction de la position,
**caractérisé en ce que**
- le dispositif de commande (17) est configuré pour exploiter le faisceau de travail optique (5), pour la détection de la zone de travail (7), avec une puissance de sortie optique qui est réduite par rapport à une limite inférieure de puissance pour la puissance de sortie optique du faisceau de travail optique (5) pour la fabrication générative.

11. Dispositif de fabrication (1) selon la revendication 10, **caractérisé en ce que** le dispositif de faisceau (3) comporte un laser ou est conçu sous la forme d'un laser, et/ou **en ce que** le dispositif de détection (13) comporte une photodiode ou est conçu sous la forme d'une photodiode.
